# EUROPEAN PATENT SPECIFICATION

(11) **EP 3 562 191 B1**
(45) Date of publication and mention of the grant of the patent: **14.07.2021**
(21) Application number: 18744710.7
(22) Date of filing: 19.01.2018
(51) Int. Cl.: H04W 16/14, H04W 28/18, H04W 72/04

(54) **DATA MULTIPLEXING AND DATA PARSING METHOD, DEVICE, AND SYSTEM**
DATENMULTIPLEX- UND DATENPARSINGVERFAHREN, VORRICHTUNG UND SYSTEM
PROCÉDÉ, DISPOSITIF ET SYSTÈME DE MULTIPLEXAGE DE DONNÉES ET D'ANALYSE DE DONNÉES

(30) Priority: 25.01.2017 CN 201710061366
(43) Date of publication of application: 30.10.2019
(73) Proprietor: Huawei Technologies Co., Ltd., Longgang District Shenzhen, Guangdong 518129 (CN)
(72) Inventor: XIANG, Gao, Shenzhen Guangdong 518129 (CN); CHEN, Lei, Shenzhen Guangdong 518129 (CN)
(74) Representative: Gill Jennings & Every LLP
(86) International application number: PCT/CN2018/073439
(87) International publication number: WO 2018/137571

(56) References cited:
- CN-A- 102 356 577
- CN-A- 104 038 312
- US-A1- 2011 317 581
- US-A1- 2012 300 653
- US-A1- 2016 337 993
- SAMSUNG: "DL RS Designs forHigher Order MIMO", 3GPP TSG RAN WG1#56, R1-090619, 13 February 2009 (2009-02-13), XP050318503,

## Description

### TECHNICAL FIELD

This application relates to the field of wireless communications technologies, and in particular, to a data multiplexing method, a data parsing method, an apparatus, and a system.

### BACKGROUND

With an increase in communication requirements and development of communications technologies, compared with an LTE (Long Term Evolution, long term evolution) system, a future communications system is to use a higher carrier frequency, for example, 39 GHz, to implement wireless communication with a higher bandwidth and a higher transmission rate.

Because a carrier frequency is greatly increased, a carrier wavelength becomes shorter, and diffraction and scattering capabilities of a radio signal decrease. Therefore, the radio signal suffers from more serious fading in a space propagation process. As a result, a coverage capability of a base station is limited, or even a transmitted radio signal can hardly be detected at a receive end. In view of this, in the future communications system, a beamforming (beamforming) technology is used to obtain a beam with good directivity, to increase power in a transmit direction, thereby increasing a signal to interference plus noise ratio (Signal to Interference plus Noise Ratio, SINR) at the receive end. To expand a coverage area and control costs of an antenna array, hybrid beamforming (Hybrid beamforming) becomes an option. The hybrid beamforming includes both digital beamforming (Digital beamforming) of a baseband and analog beamforming (Analog beamforming) at a radio frequency end.

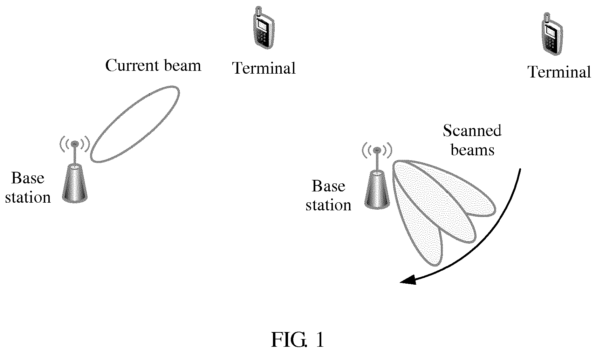

As shown in FIG. 1, when a base station performs beam scanning, a beam being scanned may be unable to cover a terminal. On the contrary, if the base station is not performing beam scanning, a beam serving the terminal may be directed at the terminal, and a CSI-RS that can be sent in the beam is used for CSI measurement.

The inventor finds, in a process of inventing the technical solutions of this application, that resource utilization is extremely low when a CSI-RS is responsible for a CSI measurement function.

US20160337993A1 discloses a user terminal, radio base station and radio communication method in a next-generation mobile communication system in which small cells are placed within a macro cell. US20110317581A1 discloses a radio reception apparatus, radio transmission apparatus, and radio communication method which are applicable to a radio communication system such as a cellular system.

### SUMMARY

The invention is defined by the features of the appended claims. To resolve the technical problem in the prior art, this application provides a data multiplexing method, a network-side device, and a terminal.

This application provides a data multiplexing method according to claim 1.

In an implementation, the network-side device carries the CSI-RS multiplexing indication information by using L1/L2/L3 signaling, and sends the L1/L2/L3 signaling to the terminal.

The L1 signaling may be DCI signaling, the L2 signaling may be MAC CE signaling, and the L3 signaling may be RRC signaling.

In this embodiment of this application, the CSI-RS multiplexing indication information is used to indicate whether multiplexing is performed on the CSI-RS and a data channel, so that multiplexing on the CSI-RS and the data channel becomes possible. In addition, the terminal can correctly parse user data based on the CSI-RS multiplexing indication information, so that resource utilization efficiency of the terminal is greatly improved.

According to another aspect, an embodiment of this application provides a network-side device according to claim 9. The network-side device may be a base station, or may be a control node.

According to still another aspect, an embodiment of this application provides a terminal according to claim 11. The terminal has a function of performing behavior of the terminal in the foregoing method design. The function may be implemented by hardware, where a structure of the terminal includes a transceiver and a processor; or may be implemented by hardware by executing related software. The hardware or software includes one or more modules corresponding to the function. The module may be software and/or hardware.

### DESCRIPTION OF DRAWINGS

To describe the technical solutions in the embodiments of this application more clearly, the following briefly describes the accompanying drawings required for describing the embodiments of this application. Apparently, the accompanying drawings in the following description are merely some embodiments of this application, and a person of ordinary skill in the art may derive other drawings from these accompanying drawings without creative efforts.
FIG. 1 is a schematic diagram in which a base station performs beam scanning;
FIG. 2 is a schematic diagram of a pilot pattern in which a CSI-RS is used for beam measurement;
FIG. 3 is a schematic diagram of a communications system according to an embodiment of this application;
FIG. 4 is a schematic diagram of data multiplexing between a terminal and a network-side device according to an embodiment of this application;
FIG. 5 is another schematic diagram of data multiplexing between a terminal and a network-side device according to an embodiment of this application;
FIG. 6 is a schematic diagram of CSI-RS multiplexing indication information in Embodiment 1 of a data multiplexing method according to the embodiments of this application;
FIG. 7 is a schematic diagram of CSI-RS multiplexing indication information in Embodiment 2 of a data multiplexing method according to the embodiments of this application;
FIG. 8 is a schematic diagram of CSI-RS multiplexing indication information in Embodiment 3 of a data multiplexing method according to the embodiments of this application;
FIG. 9 is a schematic diagram of CSI-RS multiplexing indication information in Embodiment 4 of a data multiplexing method according to the embodiments of this application;
FIG. 10 is a schematic flowchart of Embodiment 5 of a data multiplexing method according to the embodiments of this application;
FIG. 11 is a schematic diagram of deducing a multiplexing status based on CSI-RS beam information in Embodiment 5 of a data multiplexing method according to the embodiments of this application; and
FIG. 12 is another schematic diagram of deducing a multiplexing status based on CSI-RS beam information in Embodiment 5 of a data multiplexing method according to the embodiments of this application.

### DESCRIPTION OF EMBODIMENTS

To further describe this application, related technologies in the embodiments of this application are first described briefly.

To obtain features such as a higher transmission bandwidth and a higher transmission rate, a next-generation communications system is to use a higher carrier frequency compared with Long Term Evolution (LTE, Long Term Evolution).

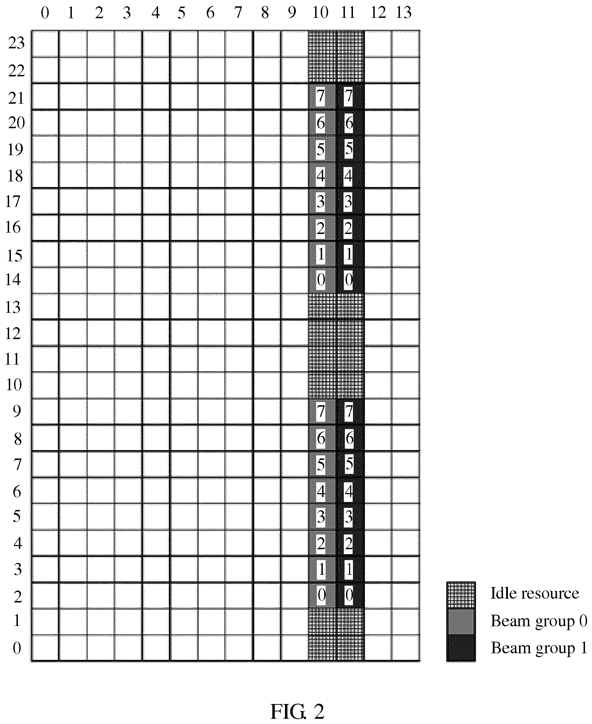

During high-frequency communication, beam scanning needs to be performed to implement beam pairing on a base station side and a user side, to ensure relatively good communication quality. FIG. 2 shows an example of a pilot pattern in which a CSI-RS is used for beam measurement. In the example of the pilot pattern, a CSI-RS is mapped into both an OFDM symbol 10 and an OFDM symbol 11 that are consecutive, and a maximum of eight simultaneously-emitted analog beams can be scanned in each OFDM symbol. Herein, the analog beams are referred to as a beam group. Each analog beam corresponds to one port, and a frequency division multiplexing manner or a code division multiplexing manner is used between ports. If scanning of more analog beams needs to be supported, more OFDM symbols can be selected for beam scanning.

The inventor finds that in the prior art, during beam scanning, it cannot be ensured that an analog beam scheduled for transmitting data of a terminal is consistent with an analog beam used in an OFDM symbol into which a CSI-RS is mapped, and consequently although there is still an idle resource in an OFDM symbol in which the CSI-RS is used for beam measurement, the resource cannot be used to transmit a data signal of the terminal.

In a next-generation communications system, a CSI-RS can be responsible for a beam measurement function, but also can be responsible for a function of performing CSI measurement on a terminal. When the CSI-RS is used for CSI measurement, a terminal on which CSI measurement is performed needs to be always covered by a beam. Therefore, an analog beam does not change or does not change greatly in a CSI measurement process. In this case, a terminal within a coverage area of the analog beam can use an idle resource of an OFDM symbol in which the CSI-RS is located, thereby improving utilization efficiency of a user resource.

The technical solutions provided in the embodiments of this application may be applied to various communications systems of a wireless cellular network, such as a Global System for Mobile Communications (Global System for Mobile Communications, GSM), a Code Division Multiple Access (Code Division Multiple Access, CDMA) system, a Wideband Code Division Multiple Access (Wideband Code Division Multiple Access Wireless, WCDMA) system, a general packet radio service (General Packet Radio Service, GPRS) system, a Long Term Evolution (Long Term Evolution, LTE) system, a Universal Mobile Telecommunications System (Universal Mobile Telecommunications System, UMTS), and a next-generation mobile communications system (for example, 5G).

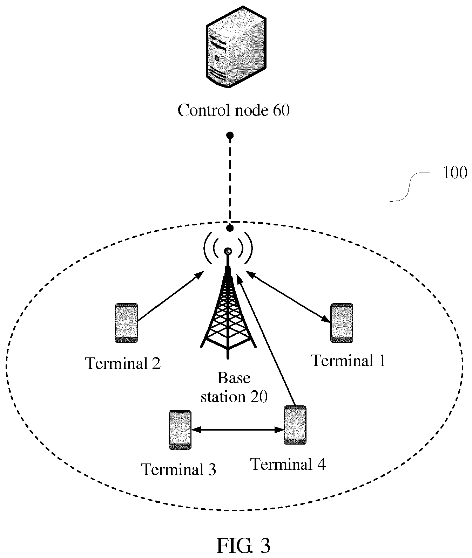

As shown in FIG. 3, an embodiment of this application provides a communications system 100. The communications system 100 at least includes at least one base station (base station, BS) 20 and a plurality of terminals, for example, a terminal 1, a terminal 2, a terminal 3, and a terminal 4. A control node 60 connected to the base station 20 can centrally schedule resources in the system, and can configure resources for the terminals, make a decision on resource multiplexing, perform interference coordination, or the like.

A network-side device in the embodiments of this application may include an improved system and device that function as equivalent devices in a conventional radio telecommunications system. This type of advanced or next-generation device may be included in an evolved wireless communications standard (for example, Long Term Evolution LTE). For example, an LTE system may include an evolved universal terrestrial radio access network (E-UTRAN) NodeB (eNB), a radio access node, or a similar component, but excludes a conventional base station. Any component of such types is referred to as an eNB in this specification. However, it should be understood that such types of components are not necessarily eNBs. In a next-generation communications system, "gNB" is to be used instead of eNB in the LTE system.

Specifically, the network-side device may be the base station 20 or the control node 60 shown in FIG. 3.

A base station in the embodiments of this application, for example, the base station 20 shown in FIG. 3, is an apparatus that is deployed in a radio access network to provide a wireless communications function for a terminal. The base station may include a macro base station, a micro base station (also referred to as a small cell), a relay station, an access point, and the like in various forms. A device that has a base station function may have different names in systems that use different radio access technologies. For example, the device is referred to as an evolved NodeB (evolved NodeB, eNB or eNodeB) in an LTE system, and the device is referred to as a NodeB (NodeB) in a 3rd generation (3rd generation, 3G) system. For ease of description, in all the embodiments of this application, the foregoing apparatuses that provide a wireless communication function for the terminal are collectively referred to as base stations or BSs.

A control node in the embodiments of this application, for example, the control node 60 in the communications system shown in FIG. 3, may be connected to a plurality of base stations, and configure resources for a plurality of terminals covered by the plurality of base stations. For example, the base station may be a NodeB in a UMTS system, and the control node may be a network controller. For another example, the base station may be a small cell, and the control node may be a macro base station that covers the small cell. For still another example, the control node may be a wireless network inter-RAT coordinating controller or the like, and the base station is a base station in a wireless network. Restrictive descriptions are not provided in the embodiments of this application.

A terminal in the embodiments of this application, for example, the terminal 1, the terminal 2, the terminal 3, or the like in the communications system 100 shown in FIG. 3, may include various handheld devices, in-vehicle devices, wearable devices, or computing devices that have a wireless communication function, or other processing devices connected to a wireless modem. The terminal may also be referred to as a mobile station (mobile station, MS for short), and may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or the like. For ease of description, in all the embodiments of this application, the devices mentioned above are collectively referred to as terminals.

System architectures and service scenarios described in the embodiments of this application are intended to describe the technical solutions of the embodiments of this application more clearly, and do not constitute any limitation on the technical solutions provided in the embodiments of this application. A person of ordinary skill in the art may be aware that, with the evolution of network architectures and emergence of new service scenarios, the technical solutions provided in the embodiments of this application are also applicable to similar technical problems.

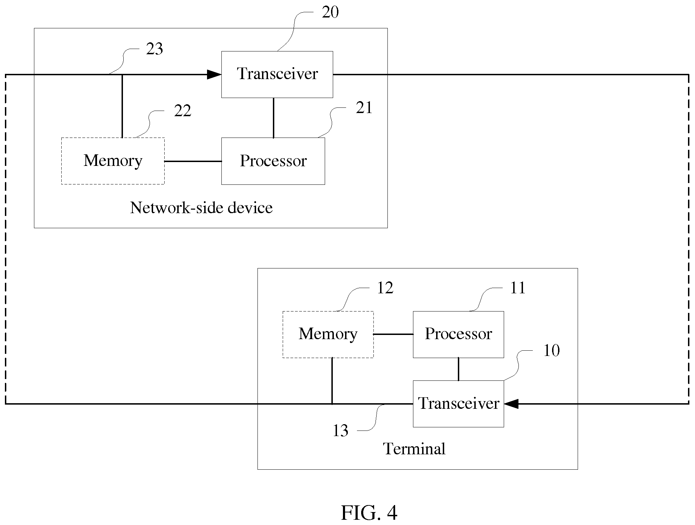

FIG. 4 is a schematic structural diagram of data multiplexing between a terminal and a network-side device according to an embodiment of this application.

The terminal provided in this embodiment of this application includes a transceiver 10 and a processor 11. The terminal may further include: a memory 12, where the memory 12 stores a computer executable instruction; and a system bus 13, where the system bus 13 is connected to the processor 11, the transceiver 10, the memory 12, and the like. The network-side device includes a transceiver 20 and a processor 21. The network-side device may further include: a memory 22, where the memory 22 stores a computer executable instruction; and a system bus 23, where the system bus 23 is connected to the processor 21, the transceiver 20, the memory 22, and the like.

In an implementation, the transceiver 20 of the network-side device sends a data signal, a CSI-RS, and corresponding CSI-RS multiplexing indication information to the transceiver 10 of the terminal by using an antenna. The transceiver 11 of the terminal receives, by using an antenna, the data signal, the CSI-RS, and the corresponding CSI-RS multiplexing indication information that are sent by the transceiver 20 of the network-side device; and the processor 11 of the terminal parses, based on the CSI-RS multiplexing indication information, the data signal in an orthogonal frequency division multiplexing OFDM symbol indicated by the CSI-RS multiplexing indication information, and demodulates the data signal together with a data signal that is in a transmission timeslot in which the OFDM symbol is located, where frequency division multiplexing is performed on the data signal and the CSI-RS in the OFDM symbol. The transmission timeslot herein is usually a time unit for data modulation and demodulation, and usually may be one TTI (transmission time interval, transmission time interval).

Alternatively, in another implementation, the transceiver 20 of the network-side device sends, to the transceiver 10 of the terminal by using an antenna, all analog beam information of a CSI-RS in a transmission timeslot and information about an analog beam for transmitting data; and
the transceiver 10 of the terminal receives all the analog beam information of the CSI-RS in the transmission timeslot and the information about the analog beam for transmitting the data; the processor 11 of the terminal determines whether there is a CSI-RS analog beam that is the same as an analog beam for transmitting a data signal of the terminal; and if yes, the processor 11 of the terminal determines that the data signal is mapped into an OFDM symbol in which the CSI-RS is located, and further, the processor 11 of the terminal parses the data signal in the OFDM symbol into which the data signal is mapped; or if no, the processor 11 of the terminal determines that the data signal is not mapped into an OFDM symbol in which the CSI-RS is located.

It should be noted that the processor 11 of the terminal and the processor 21 of the network-side device each may be a central processing unit (central processing unit, CPU for short), a network processor (network processor, NP for short), or a combination of a CPU and an NP. The processor may further include a hardware chip. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field-programmable gate array (field-programmable gate array, FPGA for short), generic array logic (generic array logic, GAL for short), or any combination thereof.

The memory 12 of the terminal and the memory 22 of the network-side device each may include a volatile memory (volatile memory), for example, a random access memory (random access memory, RAM for short); and may further include a nonvolatile memory (nonvolatile memory), for example, a flash memory (flash memory), a hard disk (hard disk drive, HDD for short), or a solid-state drive (solid-state drive, SSD for short). Alternatively, the memory may include a combination of the foregoing types of memories.

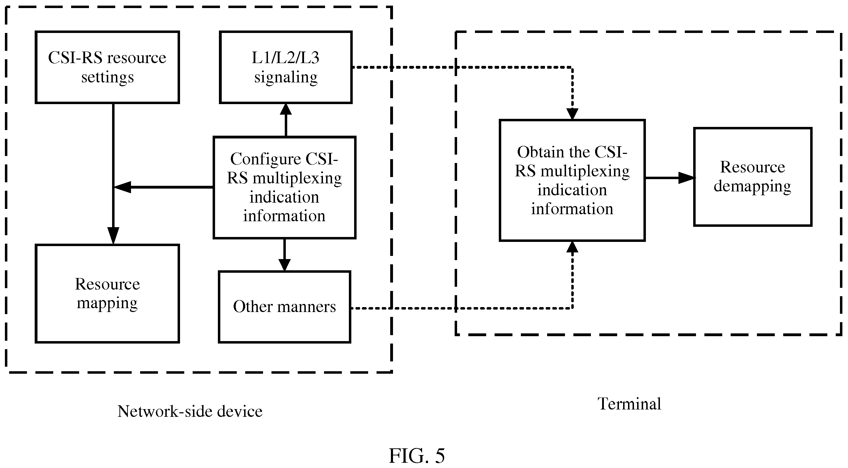

In this application, multiplexing on the CSI-RS and the data signal is implemented based on the CSI-SI multiplexing indication information. A specific solution is shown in FIG 5. With reference to FIG. 4, a data multiplexing method in an embodiment of this application is as follows:
Step 1: A processor 21 of a network-side device determines, based on an actual application scenario or a function of a CSI-RS and based on a resource usage status of an OFDM symbol in which the CSI-RS is located, whether frequency division multiplexing needs to be performed on a data signal of a terminal and the CSI-RS, and OFDM symbols in which multiplexing is to be performed; and then configures CSI-RS multiplexing indication information.

Specifically, there are the following several cases:
1. When the CSI-RS is used to perform channel state measurement on a terminal covered by an analog beam, and the OFDM symbol in which the CSI-RS is located has an idle resource, the processor 21 of the network-side device determines that frequency division multiplexing is to be performed on a data signal of the terminal and the CSI-RS.
2. When the CSI-RS is used to perform channel state measurement on a terminal covered by an analog beam, but the OFDM symbol in which the CSI-RS is located does not have an idle resource, the processor 21 of the network-side device determines that frequency division multiplexing is not to be performed on a data signal of the terminal and the CSI-RS.
3. When the CSI-RS is used for beam measurement, the processor 21 of the network-side device determines that frequency division multiplexing is not to be performed on the data signal of the terminal and the CSI-RS.

Step 2: The processor 21 on a network-side device side performs resource mapping between data and a pilot OFDM symbol based on content of the configured CSI-RS multiplexing indication information.

Step 3: A transceiver 20 of the network-side device selects, based on a configuration manner of the CSI-RS multiplexing indication information, a proper manner to notify the terminal of the CSI-RS multiplexing indication information, so that the terminal can perform resource demapping correctly. For example, the CSI-RS multiplexing indication information is carried by using L1/L2/L3 signaling, or other manners are used.

Step 4: A transceiver 10 of the terminal receives the CSI-RS multiplexing indication information, and a processor 11 of the terminal performs resource demapping based on the CSI-RS multiplexing indication information.

In step 1, the following several implementations are available for the processor 21 of the network-side device to configure the CSI-RS multiplexing indication information:
1. If frequency division multiplexing is performed on the CSI-RS and the data signal of the terminal in all OFDM symbols, the processor 21 of the network-side device configures the CSI-RS multiplexing indication information to be used to indicate that frequency division multiplexing is performed in all the OFDM symbols.
2. If frequency division multiplexing is not performed on the CSI-RS and the data signal of the terminal in any OFDM symbol, the processor 21 of the network-side device configures the CSI-RS multiplexing indication information to be used to indicate that frequency division multiplexing is not performed in any OFDM symbol.
3. If frequency division multiplexing is performed on the CSI-RS and the data signal of the terminal in some OFDM symbols, the processor 21 of the network-side device configures the CSI-RS multiplexing indication information to be used to indicate whether frequency division multiplexing is performed in each OFDM symbol.
4. If frequency division multiplexing is performed on the CSI-RS and the data signal of the terminal in some OFDM symbols, the processor 21 of the network-side device configures the CSI-RS multiplexing indication information to be used to indicate the OFDM symbols in which frequency division multiplexing is performed, or configures the indication information to be used to indicate an OFDM symbol in which frequency division multiplexing is not performed.

The following describes several implementation processes in which the network-side device configures the CSI-RS multiplexing indication information and sends the CSI-RS multiplexing indication information to the terminal in the embodiments of this application.

### Embodiment 1

To flexibly indicate a status of multiplexing on a CSI-RS and a data signal of a terminal, a transceiver 20 of a network-side device carries the CSI-RS multiplexing indication information by using L1/L2 signaling.

If multiplexing is performed on the CSI-RS and the data signal of the terminal in all OFDM symbols or multiplexing is not performed on the CSI-RS and the data signal of the terminal in any OFDM symbol, a processor 21 of the network-side device may select a 1-bit resource from downlink control information (Downlink control information, DCI) to mark the information, where 0 represents "no multiplexing", and 1 represents "multiplexing"; or 0 represents "no multiplexing", and 1 represents "no multiplexing".

If multiplexing is not performed on the CSI-RS and the data signal of the terminal in different OFDM symbols simultaneously, the processor 21 of the network-side device may configure 1-bit indication information for each OFDM symbol in which the CSI-RS is located, to independently indicate whether multiplexing is performed on the CSI-RS and the data signal of the terminal.

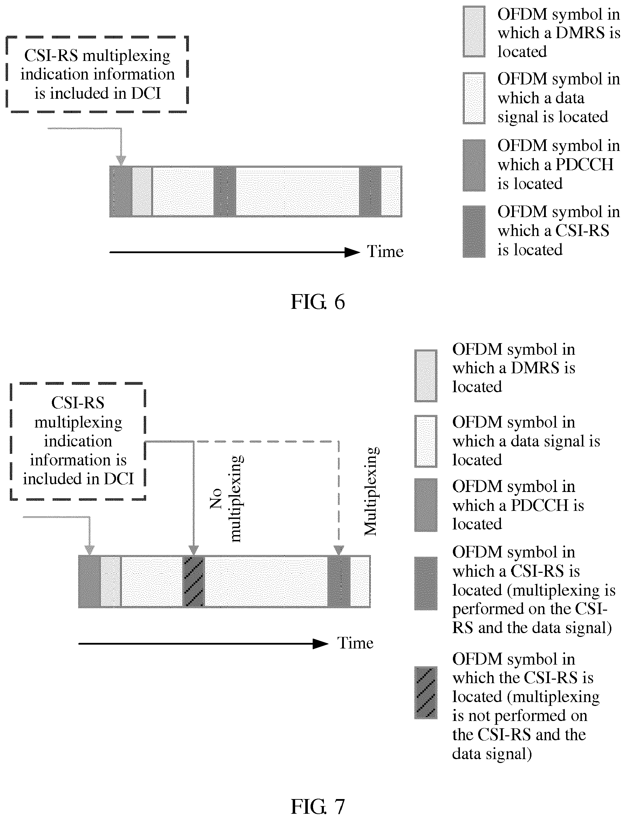

FIG. 6 shows an actual application solution of the CSI-RS multiplexing indication information. The OFDM symbols include an OFDM symbol portion in which a demodulation reference signal (demodulation reference signal, DMRS) is located, an OFDM symbol portion in which a data signal is located, an OFDM symbol portion in which a physical downlink control channel (Physical Downlink Control Channel, PDCCH) is located, and an OFDM symbol portion in which a CSI-RS is located. The CSI-RS multiplexing indication information is carried by using DCI. A processor 11 of the terminal obtains the CSI-RS multiplexing indication information by decoding the PDCCH.

It should be understood that, herein, that the network-side device carries the CSI-RS multiplexing indication information by using DCI signaling is merely an example. In other implementations, the CSI-RS multiplexing indication information may alternatively be carried by using L2 signaling, for example, MAC CE (medium access control control element, medium access control control element) signaling.

### Embodiment 2

When a CSI-RS is mapped into a plurality of OFDM symbols, but frequency division multiplexing is not performed on the CSI-RS and a data signal of a terminal only in some OFDM symbols, a processor 21 of a network-side device may indicate only some information about multiplexing on the CSI-RS and user data, to reduce overheads of indication information. A specific indication method includes the following:
1. The processor 21 of the network-side device determines to indicate only OFDM symbols into which the data signal is not mapped, and a transceiver 20 of the network-side device directly notifies, by using DCI, the terminal of the OFDM symbols into which the data signal is not mapped.
2. The processor 21 of the network-side device determines to indicate only OFDM symbols into which the data signal is mapped, and a transceiver 20 of the network-side device directly notifies, by using DCI, the terminal of the OFDM symbols into which the data signal is mapped.

FIG. 7 is a schematic diagram in which DCI is used to indicate CSI-RS multiplexing in a plurality of OFDM symbols. Only the OFDM symbols in which multiplexing is performed need to be indicated in the DCI information, and by default, multiplexing is not performed in other OFDM symbols in which the CSI-RS is located. Alternatively, only the OFDM symbols in which multiplexing is not performed need to be indicated in the DCI, and by default, other OFDM symbols in which the CSI-RS is located are OFDM symbols in which multiplexing is performed. Generally, if there are more OFDM symbols in which multiplexing is performed, an OFDM symbol in which multiplexing is not performed is indicated; or if there are more OFDM symbols in which multiplexing is not performed, an OFDM symbol in which multiplexing is performed is indicated, to reduce overheads of indication information.

### Embodiment 3

In some application scenarios, some terminals may remain in a same state for a long time. In this case, CSI-RS multiplexing indication information needs to be carried by using L3 signaling, for example, radio resource control (Radio Resource Control, RRC) signaling, to avoid an increase in L1/L2 signaling overheads. For example, if a terminal resides within a coverage area of a beam for a long time with good communication quality, beam scanning does not need to be performed frequently; or if a terminal is always moving at a high speed, beam scanning may be performed frequently.

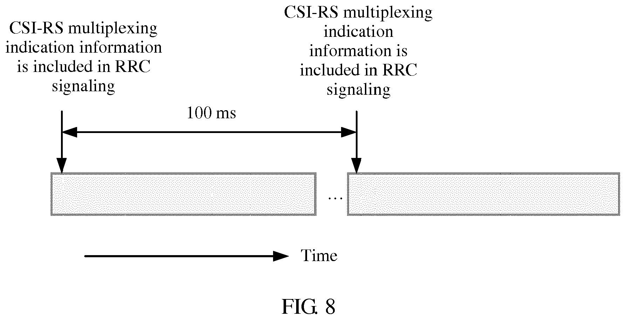

FIG. 8 is a schematic diagram in which CSI-RS multiplexing indication information is carried by using RRC signaling. A processor 21 of a network-side device carries the CSI-RS multiplexing indication information by using RRC, and sends the RRC to a terminal by using a transceiver 20 of the network-side device. A relatively long update period may be used for the RRC signaling, to avoid frequent signaling overheads.

It should be understood that the RRC signaling is merely an example, and other L3 signaling may also be used to carry the CSI-RS multiplexing indication information, provided that the technical solutions of this application can be implemented.

### Embodiment 4

In this embodiment, more flexible CSI-RS resource settings (CSI-RS resource settings) and CSI report settings (CSI report settings) are implemented by using L3 signaling in combination with L1/L2 signaling, to meet various different CSI measurement requirements. In this embodiment, CSI-RS multiplexing indication information is configured while a CSI-RS resource is configured. In other words, the CSI-RS multiplexing indication information is included in CSI-RS resource settings (CSI-RS resource settings) information, CSI-RS settings (CSI-RS settings) information, or CSI-RS initial settings (CSI-RS initial settings) information. The CSI-RS multiplexing indication information is used, by a network-side device based on current application and a scheduling requirement, to directly indicate a location of an OFDM symbol that corresponds to a CSI-RS and in which frequency division multiplexing is performed, or indicate a location of an OFDM symbol in which multiplexing is not performed. A specific indication method is as follows:
1. A processor 21 of the network-side device performs CSI-RS initial setting. During the CSI-RS initial setting, based on an application scenario of a terminal (for example, the terminal does not move rapidly within a coverage area of a beam), a default multiplexing manner is set as a manner of multiplexing on a CSI-RS and a data signal of the terminal in a relatively long communication period.
2. In a communication process, as the application scenario of the terminal changes, for example, the terminal enters a high-speed movement state, the processor 21 of the network-side device determines that previous settings about the CSI-RS multiplexing indication information are no longer applicable. In this case, the processor 21 of the network-side device updates the settings of the CSI-RS multiplexing indication information, and a transceiver 20 notifies the terminal of a new CSI-RS multiplexing manner by using L1/L2 signaling.

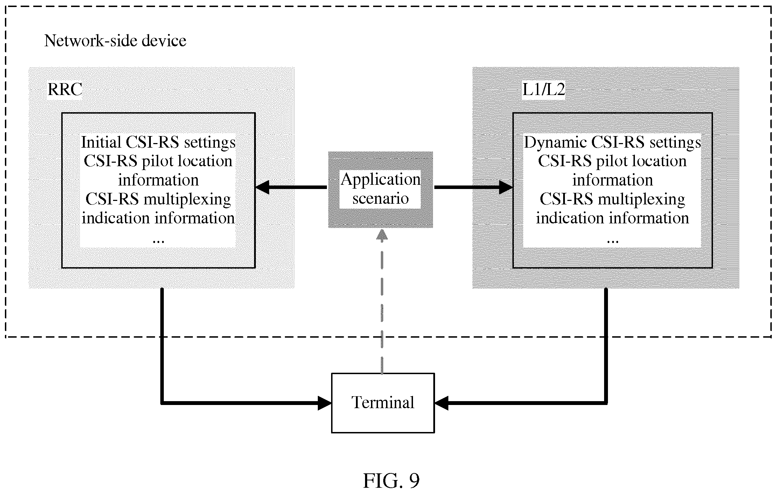

FIG. 9 is a schematic diagram of this embodiment. The change of the application scenario may be determined by the processor 21 of the network-side device based on channel quality that is fed back by the terminal in real time. If the terminal can determine the application scenario of the terminal, the terminal may alternatively actively report the application scenario to the network-side device by using a transceiver 10, for decision making.

In this implementation solution, the CSI-RS multiplexing indication information is a part of CSI-RS settings, and is updated together with the CSI-RS settings. Because the CSI settings are also an important part of CSI measurement, this also facilitates the network-side device in setting CSI-RS multiplexing manners based on different application scenarios, in addition to facilitating flexible settings.

Embodiment 1 to Embodiment 4 describe implementations in which the network-side device configures the CSI-RS multiplexing indication information and sends the CSI-RS multiplexing indication information to the terminal by using different signaling. On a terminal side, the terminal receives the CSI-RS multiplexing indication information delivered by the network-side device; and then parses a data signal in an OFDM symbol in which a CSI-RS is located, where multiplexing is performed on the CSI-RS and the data signal, and demodulates the data signal together with a data signal that is in a transmission timeslot in which the OFDM symbol is located. This is a technology well-known to a person skilled in the art. Details are not described herein.

In another implementation, the terminal may deduce, based on analog beam information of a CSI-RS, whether a data signal is mapped into an OFDM symbol in which the CSI-RS is located. The following provides detailed descriptions by using Embodiment 5.

### Embodiment 5

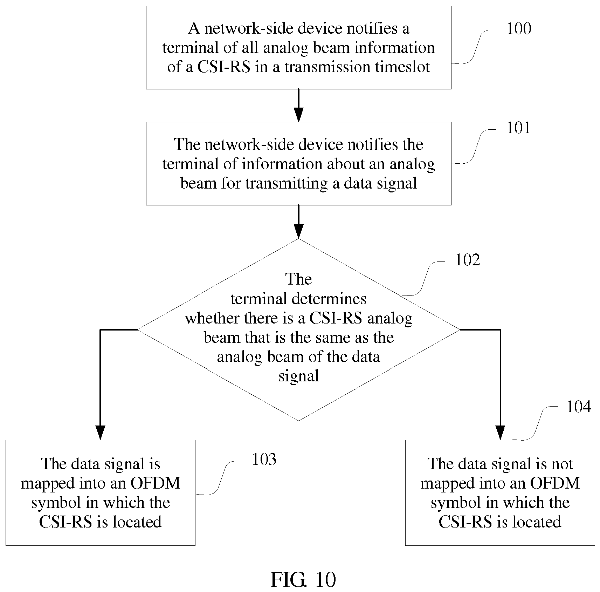

A specific process of a data multiplexing method provided in this embodiment is shown in FIG. 10:
Step 100: A transceiver 20 of a network-side device notifies a terminal of all analog beam information of a CSI-RS in a transmission timeslot. Specifically, the transceiver 20 of the network-side device notifies the terminal of all the analog beam information of the CSI-RS in the transmission timeslot by using L1/L2/L3 signaling, for example, DCI, MAC CE, or RRC signaling. The information may be an analog beam identifier, a CSI-RS resource identifier and a port number, or the like. Other methods that can represent an analog beam of the CSI-RS should also be included in this embodiment of this application.
Step 101: The transceiver 20 of the network-side device notifies the terminal of information about an analog beam for transmitting a data signal. Specifically, before data signal transmission starts, the transceiver 20 of the network-side device notifies, by using DCI or RRC, or in another manner, the terminal of the information about the analog beam for transmitting the data signal.
Step 102: After a transceiver 10 of the terminal receives the analog beam information of the CSI-RS and the information about the analog beam for transmitting the data signal, a processor 11 of the terminal determines whether there is an analog beam that is corresponding to the CSI-RS and that is the same as the analog beam for transmitting the data signal of the terminal.
Step 103: If there is an analog beam that is corresponding to the CSI-RS and that is the same as the analog beam for transmitting the data signal of the terminal, the processor 11 of the terminal considers that the data signal is mapped into an OFDM symbol in which the CSI-RS is located, and further, the processor 11 of the terminal parses the data signal in the OFDM symbol in which the CSI-RS is located.
Step 104: If there is no analog beam that is corresponding to the CSI-RS and that is the same as the analog beam for transmitting the data signal of the terminal, the processor 11 of the terminal considers that the data signal is not mapped into any OFDM symbol in which the CSI-RS is located.

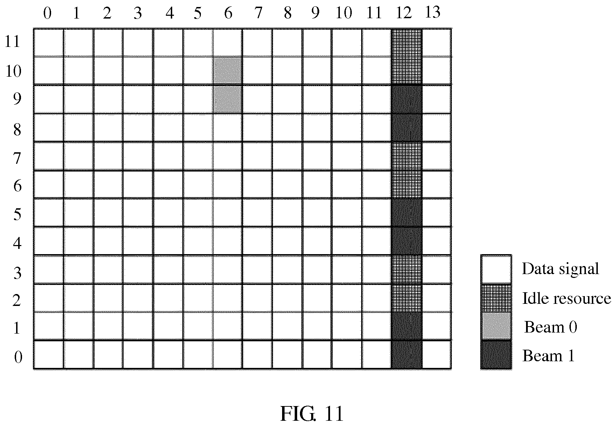

FIG. 11 is a schematic diagram of deducing a multiplexing status by a processor 11 of a terminal based on analog beam information of a CSI-RS. An analog beam for transmitting a data signal of the terminal is a beam 0. The CSI-RS is sent on the beam 0 in an OFDM symbol 6. The CSI-RS is sent on a beam 1 in an OFDM symbol 12. In this case, a network-side device enables the terminal to perform beam measurement on the beam 1. Neither the network-side device nor the terminal is sure whether the beam 1 can cover the terminal. Therefore, the terminal considers that frequency division multiplexing is not performed on the data signal and the CSI-RS in the OFDM symbol 12.

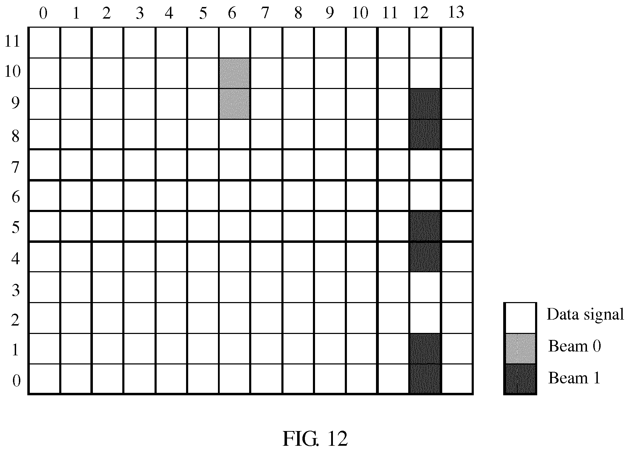

In addition, during high-frequency communication, a network-side device and a terminal may maintain a backup list of a plurality of beam pairs with relatively good communication quality, to implement more robust and reliable transmission. One beam pair includes information about a corresponding pair of transmit analog beam and receive analog beam. Therefore, even if a transmit analog beam corresponding to a CSI-RS is different from an analog beam for transmitting a data signal of the terminal, if the transmit analog beam corresponding to the CSI-RS and a receive analog beam corresponding to the terminal at a current moment are in the backup list of beam pairs, a processor 11 of the terminal also considers that multiplexing is performed on the data and the CSI-RS. Therefore, in this case, as shown in FIG. 12, a beam 1 is paired with a receive analog beam of the terminal in an OFDM symbol 12, and this can also implement reliable communication between the network-side device and the terminal.

It should be understood that the steps or operations shown in the methods in the foregoing embodiments are merely examples, and other operations or various operation variations may alternatively be performed. In addition, during specific implementation, the steps may be performed in a sequence different from that in the embodiments of this application, and not all the operations or steps shown in the embodiments of this application may be necessarily performed. Alternatively, more operations or steps than those shown in the embodiments of this application may be performed.

It should be further understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of the embodiments.

In addition, the function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data multiplexing method, comprising:
transmitting, by a network-side device, a channel state information-reference signal CSI-RS and a data signal to a terminal, wherein the CSI-RS is used for channel state measurement or beam quality measurement; and
sending, by the network-side device, CSI-RS multiplexing indication information to the terminal, wherein the CSI-RS multiplexing indication information is used to indicate whether frequency division multiplexing is performed on the data signal and the CSI-RS,
before the sending, by the network-side device, CSI-RS multiplexing indication information to the terminal, comprising:
when the CSI-RS is used to perform channel state measurement on the terminal, and an orthogonal frequency division multiplexing OFDM symbol in which the CSI-RS is located has an idle resource, determining that frequency division multiplexing is to be performed on the data signal and the CSI-RS; or
when the CSI-RS is used to perform channel state measurement on the terminal, but an OFDM symbol in which the CSI-RS is located does not have an idle resource, determining that frequency division multiplexing is not to be performed on the data signal and the CSI-RS; or
when the CSI-RS is used for beam measurement, determining that frequency division multiplexing is not to be performed on the data signal and the CSI-RS.

2. The data multiplexing method according to claim 1, after the determining that frequency division multiplexing is to be performed on the data signal and the CSI-RS, further comprising:
mapping, by the network-side device, the data signal into the resource of the OFDM symbol in which the CSI-RS is located.

3. The data multiplexing method according to claim 1, wherein
when frequency division multiplexing is performed on the CSI-RS and the data signal in all OFDM symbols, the CSI-RS multiplexing indication information is used to indicate that frequency division multiplexing is performed in all the OFDM symbols; or
when frequency division multiplexing is not performed on the CSI-RS and the data signal in any OFDM symbol, the CSI-RS multiplexing indication information is used to indicate that frequency division multiplexing is not performed in any OFDM symbol; or
when frequency division multiplexing is performed on the CSI-RS and the data signal in some OFDM symbols, the CSI-RS multiplexing indication information is used to indicate whether frequency division multiplexing is performed in each OFDM symbol; or
when frequency division multiplexing is performed on the CSI-RS and the data signal in some OFDM symbols, the CSI-RS multiplexing indication information is used to indicate the OFDM symbols in which frequency division multiplexing is performed; or
when frequency division multiplexing is performed on the CSI-RS and the data signal in some OFDM symbols, the CSI-RS multiplexing indication information is used to indicate an OFDM symbol in which frequency division multiplexing is not performed.

4. The data multiplexing method according to claim 1, wherein the sending, by the network-side device, CSI-RS multiplexing indication information to the terminal comprises:
carrying, by the network-side device, the CSI-RS multiplexing indication information by using L1/L2/L3 signaling, and sending the L1/L2/L3 signaling to the terminal.

5. The data multiplexing method according to any one of claims 1 to 4, wherein the CSI-RS multiplexing indication information is comprised in CSI-RS resource settings information.

6. The data multiplexing method according to claim 5, wherein the CSI-RS multiplexing indication information is updated synchronously with the CSI-RS resource settings information or is updated as an application scenario of the terminal changes.

7. A data parsing method, comprising:
receiving, by a terminal, a channel state information-reference signal CSI-RS, a data signal, and CSI-RS multiplexing indication information from a network-side device, wherein the CSI-RS is used for channel state measurement or beam quality measurement; and
parsing, by the terminal, the data signal in an orthogonal frequency division multiplexing OFDM symbol indicated by the CSI-RS multiplexing indication information, wherein frequency division multiplexing is performed on the data signal and the CSI-RS in the OFDM symbol,
wherein when the CSI-RS is used to perform channel state measurement on the terminal, and an orthogonal frequency division multiplexing OFDM symbol in which the CSI-RS is located has an idle resource, determining that frequency division multiplexing is to be performed on the data signal and the CSI-RS; or
when the CSI-RS is used to perform channel state measurement on the terminal, but an OFDM symbol in which the CSI-RS is located does not have an idle resource, determining that frequency division multiplexing is not to be performed on the data signal and the CSI-RS; or
when the CSI-RS is used for beam measurement, determining that frequency division multiplexing is not to be performed on the data signal and the CSI-RS.

8. The data parsing method according to claim 7, wherein the parsing, by the terminal, the data signal in an orthogonal frequency division multiplexing OFDM symbol indicated by the CSI-RS multiplexing indication information comprises:
obtaining, by the terminal, the data signal from the OFDM symbol according to an indication of the CSI-RS multiplexing indication information, and demodulating the data signal together with a data signal that is in a transmission timeslot in which the OFDM symbol is located.

9. A network-side device, comprising:
a transceiver (10), configured to transmit a channel state information-reference signal CSI-RS and a data signal to a terminal, wherein the CSI-RS is used for channel state measurement or beam quality measurement, wherein
the transceiver is further configured to send CSI-RS multiplexing indication information to the terminal, wherein the CSI-RS multiplexing indication information is used to indicate whether frequency division multiplexing is performed on the data signal transmitted to the terminal and the CSI-RS,
wherein the network device further comprises a processor, and the processor is configured when in use to perform the method according to claim 1 or claim 2.

10. The network-side device according to claim 9, configured when in use to perform the method according to any of claims 4, 5, 6, 7.

11. A terminal, comprising:
a transceiver, configured to receive a channel state information-reference signal CSI-RS and a data signal from a network-side device, wherein the CSI-RS is used for channel state measurement or beam quality measurement, wherein
the transceiver is further configured to receive CSI-RS multiplexing indication information from the network-side device; and
a processor, configured to parse the data signal in an orthogonal frequency division multiplexing OFDM symbol indicated by the CSI-RS multiplexing indication information, wherein frequency division multiplexing is performed on the data signal and the CSI-RS in the OFDM symbol,
wherein when the CSI-RS is used to perform channel state measurement on the terminal, and an orthogonal frequency division multiplexing OFDM symbol in which the CSI-RS is located has an idle resource, determining that frequency division multiplexing is to be performed on the data signal and the CSI-RS; or
when the CSI-RS is used to perform channel state measurement on the terminal, but an OFDM symbol in which the CSI-RS is located does not have an idle resource, determining that frequency division multiplexing is not to be performed on the data signal and the CSI-RS; or
when the CSI-RS is used for beam measurement, determining that frequency division multiplexing is not to be performed on the data signal and the CSI-RS.

12. The terminal according to claim 11, wherein
the processor (11) of the terminal is configured to obtain the data signal from the OFDM symbol according to an indication of the CSI-RS multiplexing indication information, and to demodulate the data signal together with a data signal that is in a transmission timeslot in which the OFDM is located.

## Patentansprüche

1. Datenmultiplexverfahren, umfassend:
Übertragen, durch eine netzwerkseitige Vorrichtung, eines Kanalzustandsinformationenreferenzsignals (*channel state information-reference signal -* CSI-RS) und eines Datensignals an ein Endgerät, wobei das CSI-RS für eine Kanalzustandsmessung oder eine Strahlqualitätsmessung verwendet wird; und
Senden, durch die netzwerkseitige Vorrichtung, von CSI-RS-Multiplexanzeigeinformationen an das Endgerät, wobei die CSI-RS-Multiplexanzeigeinformationen verwendet werden, um anzuzeigen, ob ein Frequenzmultiplexverfahren an dem Datensignal und dem CSI-RS durchgeführt wird,
vor dem Senden, durch die netzwerkseitige Vorrichtung, von CSI-RS-Multiplexanzeigeinformationen an das Endgerät, umfassend:
wenn das CSI-RS verwendet wird, um die Kanalzustandsmessung an dem Endgerät durchzuführen, und ein orthogonales Frequenzmultiplexverfahrens(*orthogonal frequency division multiplexing* - OFDM)-Symbol, in dem sich das CSI-RS befindet, eine freie Ressource aufweist, Bestimmen, dass das Frequenzmultiplexverfahren an dem Datensignal und dem CSI-RS durchgeführt werden soll; oder
wenn das CSI-RS verwendet wird, um die Kanalzustandsmessung an dem Endgerät durchzuführen, aber ein OFDM-Symbol, in dem sich das CSI-RS befindet, keine freie Ressource aufweist, Bestimmen, dass das Frequenzmultiplexverfahren an dem Datensignal und dem CSI-RS nicht durchgeführt werden soll; oder
wenn das CSI-RS für eine Strahlmessung verwendet wird, Bestimmen, dass das Frequenzmultiplexverfahren an dem Datensignal und dem CSI-RS nicht durchgeführt werden soll.

2. Datenmultiplexverfahren nach Anspruch 1, nach dem Bestimmen, dass das Frequenzmultiplexverfahren an dem Datensignal und dem CSI-RS durchgeführt werden soll, ferner umfassend:
Zuordnen, durch die netzwerkseitige Vorrichtung, des Datensignals zu der Ressource des OFDM-Symbols, in dem sich das CSI-RS befindet.

3. Datenmultiplexverfahren nach Anspruch 1, wobei,
wenn das Frequenzmultiplexverfahren an dem CSI-RS und dem Datensignal in allen OFDM-Symbolen durchgeführt wird, die CSI-RS-Multiplexanzeigeinformationen verwendet werden, um anzuzeigen, dass das Frequenzmultiplexverfahren in allen OFDM-Symbolen durchgeführt wird; oder
wenn das Frequenzmultiplexverfahren an dem CSI-RS und dem Datensignal in einem beliebigen OFDM-Symbol nicht durchgeführt wird, die CSI-RS-Multiplexanzeigeinformationen verwendet werden, um anzuzeigen, dass das Frequenzmultiplexverfahren in keinem beliebigen OFDM-Symbol durchgeführt wird; oder
wenn das Frequenzmultiplexverfahren an dem CSI-RS und dem Datensignal in einigen OFDM-Symbolen durchgeführt wird, die CSI-RS-Multiplexanzeigeinformationen verwendet werden, um anzuzeigen, ob das Frequenzmultiplexverfahren in jedem OFDM-Symbol durchgeführt wird; oder,
wenn das Frequenzmultiplexverfahren an dem CSI-RS und dem Datensignal in einigen OFDM-Symbolen durchgeführt wird, die CSI-RS-Multiplexanzeigeinformationen verwendet werden, um die OFDM-Symbole anzuzeigen, in denen das Frequenzmultiplexverfahren durchgeführt wird; oder
wenn das Frequenzmultiplexverfahren an dem CSI-RS und dem Datensignal in einigen OFDM-Symbolen durchgeführt wird, die CSI-RS-Multiplexanzeigeinformationen verwendet werden, um ein OFDM-Symbol anzuzeigen, in dem das Frequenzmultiplexverfahren nicht durchgeführt wird.

4. Datenmultiplexverfahren nach Anspruch 1, wobei das Senden, durch die netzwerkseitige Vorrichtung, von CSI-RS-Multiplexanzeigeinformationen an das Endgerät Folgendes umfasst:
Übertragen, durch die netzwerkseitige Vorrichtung, der CSI-RS-Multiplexanzeigeinformationen durch Verwenden einer L1/L2/L3-Signalisierung und Senden der L1/L2/L3-Signalisierung an das Endgerät.

5. Datenmultiplexverfahren nach einem der Ansprüche 1 bis 4, wobei die CSI-RS-Multiplexanzeigeinformationen in CSI-RS-Ressourceneinstellungsinformationen enthalten sind.

6. Datenmultiplexverfahren nach Anspruch 5, wobei die CSI-RS-Multiplexanzeigeinformationen mit den CSI-RS-Ressourceneinstellungsinformationen synchron aktualisiert werden oder aktualisiert werden, wenn sich ein Anwendungsszenario des Endgeräts ändert.

7. Datenparsingverfahren, umfassend:
Empfangen, durch ein Endgerät, eines Kanalzustandsinformationenreferenzsignals (CSI-RS), eines Datensignals und von CSI-RS-Multiplexanzeigeinformationen von einer netzwerkseitigen Vorrichtung, wobei das CSI-RS für die Kanalzustandsmessung oder die Strahlqualitätsmessung verwendet wird; und
Parsen, durch das Endgerät, des Datensignals in einem orthogonalen Frequenzmultiplexverfahrens(OFDM)-Symbol, das durch die CSI-RS-Multiplexanzeigeinformationen angezeigt wird, wobei das Frequenzmultiplexverfahren an dem Datensignal und dem CSI-RS in dem OFDM-Symbol durchgeführt wird,
wobei wenn das CSI-RS verwendet wird, um die Kanalzustandsmessung an dem Endgerät durchzuführen, und ein orthogonales Frequenzmultiplexverfahrens(OFDM)-Symbol, in dem sich das CSI-RS befindet, eine freie Ressource aufweist, Bestimmen, dass ein Frequenzmultiplexverfahren an dem Datensignal und dem CSI-RS durchgeführt werden soll; oder
wenn das CSI-RS verwendet wird, um die Kanalzustandsmessung an dem Endgerät durchzuführen, aber ein OFDM-Symbol, in dem sich das CSI-RS befindet, keine freie Ressource aufweist, Bestimmen, dass das Frequenzmultiplexverfahren an dem Datensignal und dem CSI-RS nicht durchgeführt werden soll; oder
wenn das CSI-RS für eine Strahlmessung verwendet wird, Bestimmen, dass das Frequenzmultiplexverfahren an dem Datensignal und dem CSI-RS nicht durchgeführt werden soll.

8. Datenparsingverfahren nach Anspruch 7, wobei das Parsen, durch das Endgerät, des Datensignals in einem orthogonalen Frequenzmultiplexverfahrens(OFDM)-Symbol, das durch die CSI-RS-Multiplexanzeigeinformationen angezeigt wird, Folgendes umfasst:
Erhalten, durch das Endgerät, des Datensignals von dem OFDM-Symbol gemäß einer Anzeige der CSI-RS-Multiplexanzeigeinformationen und Demodulieren des Datensignals zusammen mit einem Datensignal, das in einem Übertragungszeitfenster liegt, in dem sich das OFDM-Symbol befindet.

9. Netzwerkseitige Vorrichtung, umfassend:
einen Sendeempfänger (10), der konfiguriert ist, um ein Kanalzustandsinformationenreferenzsignal (CSI-RS) und ein Datensignal an ein Endgerät zu senden, wobei das CSI-RS für die Kanalzustandsmessung oder die Strahlqualitätsmessung verwendet wird, wobei
der Sendeempfänger ferner konfiguriert ist, um CSI-RS-Multiplexanzeigeinformationen an das Endgerät zu senden, wobei die CSI-RS-Multiplexanzeigeinformationen verwendet werden, um anzuzeigen, ob das Frequenzmultiplexverfahren an dem Datensignal, das an das Endgerät übertragen wird, und dem CSI-RS durchgeführt wird,
wobei die Netzwerkvorrichtung ferner einen Prozessor umfasst und der Prozessor konfiguriert ist, um das Verfahren nach Anspruch 1 oder 2 durchzuführen, wenn er in Verwendung ist.

10. Netzwerkseitige Vorrichtung nach Anspruch 9, die konfiguriert ist, um das Verfahren nach einem der Ansprüche 4, 5, 6, 7 durchzuführen, wenn sie in Verwendung ist.

11. Endgerät, umfassend:
einen Sendeempfänger, der konfiguriert ist, um ein Kanalzustandsinformationenreferenzsignal (CSI-RS) und ein Datensignal von einer netzwerkseitigen Vorrichtung zu empfangen, wobei das CSI-RS für die Kanalzustandsmessung oder die Strahlqualitätsmessung verwendet wird, wobei
der Sendeempfänger ferner konfiguriert ist, um CSI-RS-Multiplexanzeigeinformationen von der netzwerkseitigen Vorrichtung zu empfangen; und
einen Prozessor, der konfiguriert ist, um das Datensignal in einem orthogonalem Frequenzmultiplexverfahrens(OFDM)-Symbol zu parsen, das durch die CSI-RS-Multiplexanzeigeinformationen angezeigt wird, wobei das Frequenzmultiplexverfahren an dem Datensignal und dem CSI-RS in dem OFDM-Symbol durchgeführt wird,
wobei, wenn das CSI-RS verwendet wird, um die Kanalzustandsmessung an dem Endgerät durchzuführen, und ein orthogonales Frequenzmultiplexverfahrens(OFDM)-Symbol, in dem sich das CSI-RS befindet, eine freie Ressource aufweist, Bestimmen, dass ein Frequenzmultiplexverfahren an dem Datensignal und dem CSI-RS durchgeführt werden soll; oder
wenn das CSI-RS verwendet wird, um die Kanalzustandsmessung an dem Endgerät durchzuführen, aber ein OFDM-Symbol, in dem sich das CSI-RS befindet, keine freie Ressource aufweist, Bestimmen, dass das Frequenzmultiplexverfahren an dem Datensignal und dem CSI-RS nicht durchgeführt werden soll; oder
wenn das CSI-RS für eine Strahlmessung verwendet wird, Bestimmen, dass das Frequenzmultiplexverfahren an dem Datensignal und dem CSI-RS nicht durchgeführt werden soll.

12. Endgerät nach Anspruch 11, wobei
der Prozessor (11) des Endgeräts konfiguriert ist, um das Datensignal von dem OFDM-Symbol gemäß einer Anzeige der CSI-RS-Multiplexanzeigeinformationen zu erhalten und das Datensignal zusammen mit einem Datensignal zu demodulieren, das in einem Übertragungszeitfenster liegt, in dem sich das OFDM befindet.

## Revendications

1. Procédé de multiplexage de données, comprenant :
la transmission, par un dispositif côté réseau, d'un signal de référence d'informations d'état de canal, CSI-RS, et d'un signal de données à un terminal, le CSI-RS étant utilisé pour la mesure d'état de canal ou la mesure de qualité de faisceau ; et
l'envoi, par le dispositif côté réseau, d'informations d'indication de multiplexage CSI-RS au terminal, les informations d'indication de multiplexage CSI-RS étant utilisées pour indiquer si le multiplexage par répartition en fréquence est effectué sur le signal de données et le CSI-RS,
avant l'envoi, par le dispositif côté réseau, des informations d'indication de multiplexage CSI-RS au terminal, comprenant :
lorsque le CSI-RS est utilisé pour effectuer une mesure d'état de canal sur le terminal, et qu'un symbole de multiplexage par répartition orthogonale en fréquence, OFDM, dans lequel se situe le CSI-RS a une ressource inactive, la détermination du fait que le multiplexage par répartition en fréquence doit être effectué sur le signal de données et le CSI-RS ; ou
lorsque le CSI-RS est utilisé pour effectuer une mesure d'état de canal sur le terminal, mais qu'un symbole OFDM dans lequel se situe le CSI-RS n'a pas de ressource inactive, la détermination du fait que le multiplexage par répartition en fréquence ne doit pas être effectué sur le signal de données et le CSI-RS ; ou
lorsque le CSI-RS est utilisé pour la mesure de faisceau, la détermination du fait que le multiplexage par répartition en fréquence ne doit pas être effectué sur le signal de données et le CSI-RS.

2. Procédé de multiplexage de données selon la revendication 1, après la détermination du fait que le multiplexage par répartition en fréquence doit être effectué sur le signal de données et le CSI-RS, comprenant en outre :
le mappage, par le dispositif côté réseau, du signal de données dans la ressource du symbole OFDM dans lequel se situe le CSI-RS.

3. Procédé de multiplexage de données selon la revendication 1,
lorsque le multiplexage par répartition en fréquence est effectué sur le CSI-RS et le signal de données dans tous les symboles OFDM, les informations d'indication de multiplexage CSI-RS étant utilisées pour indiquer que le multiplexage par répartition en fréquence est effectué dans tous les symboles OFDM ; ou
lorsque le multiplexage par répartition en fréquence n'est effectué sur le CSI-RS et le signal de données dans aucun symbole OFDM, les informations d'indication de multiplexage CSI-RS étant utilisées pour indiquer que le multiplexage par répartition en fréquence n'est effectué dans aucun symbole OFDM ; ou
lorsque le multiplexage par répartition en fréquence est effectué sur le CSI-RS et le signal de données dans certains symboles OFDM, les informations d'indication de multiplexage CSI-RS étant utilisées pour indiquer si le multiplexage par répartition en fréquence est effectué dans chaque symbole OFDM ; ou
lorsque le multiplexage par répartition en fréquence est effectué sur le CSI-RS et le signal de données dans certains symboles OFDM, les informations d'indication de multiplexage CSI-RS étant utilisées pour indiquer les symboles OFDM dans lesquels le multiplexage par répartition en fréquence est effectué ; ou
lorsque le multiplexage par répartition en fréquence est effectué sur le CSI-RS et le signal de données dans certains symboles OFDM, les informations d'indication de multiplexage CSI-RS étant utilisées pour indiquer un symbole OFDM dans lequel le multiplexage par répartition en fréquence n'est pas effectué.

4. Procédé de multiplexage de données selon la revendication 1, l'envoi, par le dispositif côté réseau, des informations d'indication de multiplexage CSI-RS au terminal comprenant :
le transport, par le dispositif côté réseau, des informations d'indication de multiplexage CSI-RS en utilisant la signalisation L1/L2/L3, et l'envoi de la signalisation L1/L2/L3 au terminal.

5. Procédé de multiplexage de données selon l'une quelconque des revendications 1 à 4, les informations d'indication de multiplexage CSI-RS étant comprises dans les informations de paramètres de ressources CSI-RS.

6. Procédé de multiplexage de données selon la revendication 5, les informations d'indication de multiplexage CSI-RS étant mises à jour de manière synchrone avec les informations de paramètres de ressources CSI-RS ou étant mises à jour lorsqu'un scénario d'application du terminal change.

7. Procédé d'analyse de données, comprenant :
la réception, par un terminal, d'un signal de référence d'informations d'état de canal CSI-RS, d'un signal de données et d'informations d'indication de multiplexage CSI-RS à partir d'un dispositif côté réseau, le CSI-RS étant utilisé pour la mesure d'état de canal ou la mesure de qualité de faisceau ; et
l'analyse, par le terminal, du signal de données dans un symbole de multiplexage par répartition orthogonale en fréquence, OFDM, indiqué par les informations d'indication de multiplexage CSI-RS, le multiplexage par répartition en fréquence étant effectué sur le signal de données et le CSI-RS dans le symbole OFDM,
lorsque le CSI-RS est utilisé pour effectuer une mesure d'état de canal sur le terminal, et qu'un symbole de multiplexage par répartition orthogonale en fréquence, OFDM, dans lequel se situe le CSI-RS a une ressource inactive, la détermination du fait que le multiplexage par répartition en fréquence doit être effectué sur le signal de données et le CSI-RS ; ou
lorsque le CSI-RS est utilisé pour effectuer une mesure d'état de canal sur le terminal, mais qu'un symbole OFDM dans lequel se situe le CSI-RS n'a pas de ressource inactive, la détermination du fait que le multiplexage par répartition en fréquence ne doit pas être effectué sur le signal de données et le CSI-RS ; ou
lorsque le CSI-RS est utilisé pour la mesure de faisceau, la détermination du fait que le multiplexage par répartition en fréquence ne doit pas être effectué sur le signal de données et le CSI-RS.

8. Procédé d'analyse de données selon la revendication 7, l'analyse, par le terminal, du signal de données dans un symbole de multiplexage par répartition orthogonale en fréquence, OFDM, indiqué par les informations d'indication de multiplexage CSI-RS comprenant :
l'obtention, par le terminal, du signal de données à partir du symbole OFDM selon une indication des informations d'indication de multiplexage CSI-RS, et la démodulation du signal de données conjointement avec un signal de données qui se situe dans un intervalle de temps de transmission dans lequel se situe le symbole OFDM.

9. Dispositif côté réseau, comprenant :
un émetteur-récepteur (10), configuré pour transmettre un signal de référence d'informations d'état de canal, CSI-RS, et un signal de données à un terminal, le CSI-RS étant utilisé pour la mesure d'état de canal ou la mesure de qualité de faisceau,
l'émetteur-récepteur étant en outre configuré pour envoyer des informations d'indication de multiplexage CSI-RS au terminal, les informations d'indication de multiplexage CSI-RS étant utilisées pour indiquer si le multiplexage par répartition en fréquence est effectué sur le signal de données transmis au terminal et le CSI-RS,
le dispositif réseau comprenant en outre un processeur, et le processeur étant configuré lors de son utilisation pour effectuer le procédé selon la revendication 1 ou la revendication 2.

10. Dispositif côté réseau selon la revendication 9, configuré lors de son utilisation pour effectuer le procédé selon l'une quelconque des revendications 4, 5, 6, 7.

11. Terminal comprenant :
un émetteur-récepteur, configuré pour recevoir un signal de référence d'informations d'état de canal, CSI-RS, et un signal de données d'un dispositif côté réseau, le CSI-RS étant utilisé pour la mesure d'état de canal ou la mesure de qualité de faisceau,
l'émetteur-récepteur étant en outre configuré pour recevoir des informations d'indication de multiplexage CSI-RS du dispositif côté réseau ; et
un processeur, configuré pour analyser le signal de données dans un symbole de multiplexage par répartition orthogonale en fréquence, OFDM, indiqué par les informations d'indication de multiplexage CSI-RS, le multiplexage par répartition en fréquence étant effectué sur le signal de données et le CSI-RS dans le symbole OFDM,
lorsque le CSI-RS est utilisé pour effectuer une mesure d'état de canal sur le terminal, et qu'un symbole de multiplexage par répartition orthogonale en fréquence, OFDM, dans lequel se situe le CSI-RS a une ressource inactive, la détermination du fait que le multiplexage par répartition en fréquence doit être effectué sur le signal de données et le CSI-RS ; ou
lorsque le CSI-RS est utilisé pour effectuer une mesure d'état de canal sur le terminal, mais qu'un symbole OFDM dans lequel se situe le CSI-RS n'a pas de ressource inactive, la détermination du fait que le multiplexage par répartition en fréquence ne doit pas être effectué sur le signal de données et le CSI-RS ; ou
lorsque le CSI-RS est utilisé pour la mesure de faisceau, la détermination du fait que le multiplexage par répartition en fréquence ne doit pas être effectué sur le signal de données et le CSI-RS.

12. Terminal selon la revendication 11,
le processeur (11) du terminal étant configuré pour obtenir le signal de données à partir du symbole OFDM selon une indication des informations d'indication de multiplexage CSI-RS, et pour démoduler le signal de données conjointement avec un signal de données qui se trouve dans un intervalle de temps de transmission dans lequel se situe l'OFDM.
